Europäisches Patentamt

(19) European Patent Office

Office européen des brevets

(11) Publication number: **0 036 687**
**B1**

(12) **EUROPEAN PATENT SPECIFICATION**

(45) Date of publication of patent specification: **05.09.84**

(21) Application number: **81200278.0**

(22) Date of filing: **11.03.81**

(51) Int. Cl.³: **B 29 F 1/00**, B 22 D 17/22, B 22 D 17/20

(54) **Pressure die-casting machine with at least one rotatable platen.**

(30) Priority: **13.03.80 NL 8001502**

(43) Date of publication of application:
**30.09.81 Bulletin 81/39**

(45) Publication of the grant of the patent:
**05.09.84 Bulletin 84/36**

(84) Designated Contracting States:
**CH DE FR GB IT LI NL SE**

(56) References cited:
**DE-B-1 137 200**
**FR-A-1 074 920**
**FR-A-1 180 494**
**FR-A-2 074 200**
**US-A-3 669 593**

**KAUTSCHUK & GUMMI-KUNSTSTOFFE, vol. 32, no. 5, 1979 HEIDELBERG (DE) A. BOCKMANN "Neuartige Herstellungsmethoden von technischen Gummiwaren", pages 330-340**

(73) Proprietor: **Quéré, Hendrik Karel**
**Berkensingel 2**
**NL-8172 AK Vaassen (NL)**

(72) Inventor: **Quéré, Hendrik Karel**
**Berkensingel 2**
**NL-8172 AK Vaassen (NL)**

(74) Representative: **van der Beek, George Frans et al**
**Nederlandsch Octrooibureau Johan de Wittlaan 15 P.O. Box 29720**
**NL-2502 LS Den Haag (NL)**

Courier Press, Leamington Spa, England.

## Description

The invention relates to a pressure die-casting machine consisting of at least two platens, each carrying at least two die-sections, which platens are rotational along a common axis, whereby the centre of gravity of at least one of the platens with the die-sections connected therewith is not coinciding with said axis.

Such a machine is known from DE—A—1 137 200. The platens of this machine are rotational along a common axis, but not rotational with respect to each other. Casting takes place when two die-sections are in their lowest position opposite each other. At the same time the two other die-sections are lying opposite each other at the left or right side of the common axis.

Removing a cast article from the die is possible since one die-section can be retracted from the opposite die-section. However, the die-sections of the die from which the cast article must be removed remain opposite each other. This will hinder the ejection of the cast article and further treatments to be done on said die-sections. These further treatments comprise control of the core pull members, lubricating and cooling the die-sections and-so-on.

The present invention aims to avoid these drawbacks and this is obtained in that the platens can move with respect to each other in translational and rotational direction along said axis, whereby locking means are present for locking the rotational movement of the platens, which can carry out or follow completely or partly the translational movement of the platen(s).

In this way it is possible to remove the cast article from the die-sections and to do further treatments in a position in which the die-sections are completely free from each other.

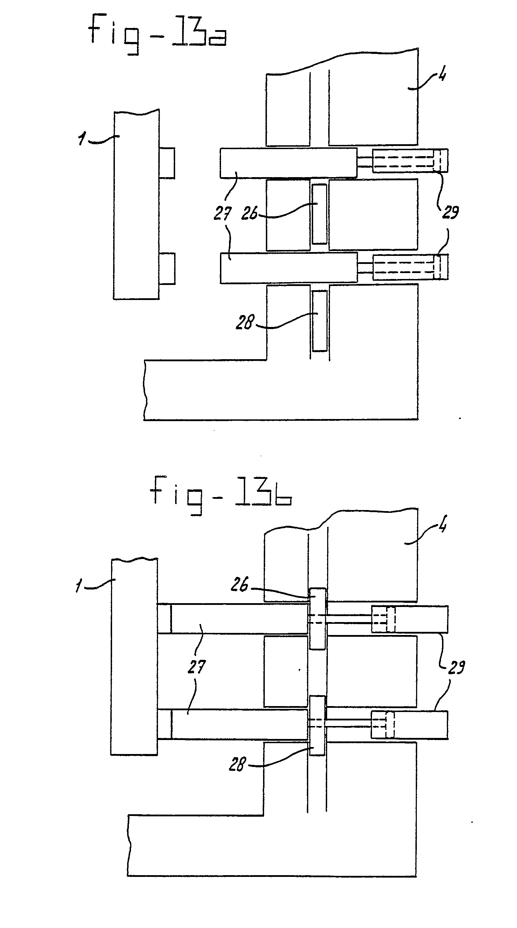

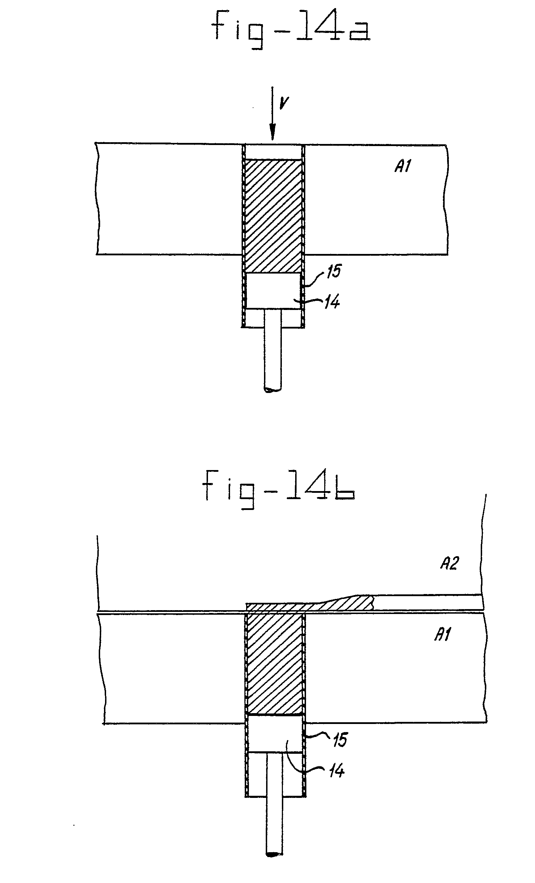

It is remarked that from "Kautschuk + Gummi-Kunststoffe", volume 32, Nr. 5, 1979, pages 333—340, especially pages 336—337, paragraph 2,4; Fig. 14 a machine is known for manufacturing rubber products by pressure die-casting.

Each platen of this known casting machine consists of two opposite halves, which are arranged on both sides of an axis of rotation and translation, whereby each half is provided with identical die-sections.

The axes of rotation and translation of both platens are parallel to each other, but are lying at a certain distance from each other. For this reason this known casting device is not suitable for metal casting in connection with the high temperatures. For casting large work pieces a distance between both axes of 1500—2000 mm is quite normal, which may result in a heat expansion of the ends of the platens in opposite direction of about 0.5 mm. This means that the mutual distance is increased to about 1 mm.

This is completely inadmissible, because in that case the closed die-sections are not aligned precisely.

Further at the known casting machine the centre of gravity of each platen is lying in the axis of rotation and translation, which is favourable since the forces are in equilibrium, but which means that each platen must be rotated always over 180° in order to provide that during the required filling and cooling time of the casting, whereby the die-sections of the one platen half are pressed against the die-sections of the other platen half, the die-sections of the other halves remain free accessible for carrying out further treatments.

The die-sections on each platen are now not at an angle of 180° to each other, but at a smaller angle, for instance of 90°.

The invention will now be explained with reference to the drawings, in which

Fig. 1—4 are schematical sideviews of an embodiment of the present invention in different positions;

Fig. 5, 6 and 7 show in a more constructive way this embodiment in different positions,

Fig. 8 is a cross-section on the line VIII—VIII in Fig. 6.

Fig. 9 is a cross-section on the line IX—IX in Fig. 7.

Fig. 10 is a cross-section on the line X—X in Fig. 6.

Fig. 11 is a topview of the casting machine with the apparatus for removing a casting.

Fig. 12 is a topview of the driving mechanism of the rotation locking means.

Fig. 13a and 13b show other embodiments of the locking means for applying the closing force of the die-sections.

Fig. 14a and 14b respectively 15a, 15b show the position of the filling cylinder at vertical resp. inclined axis of the casting machine.

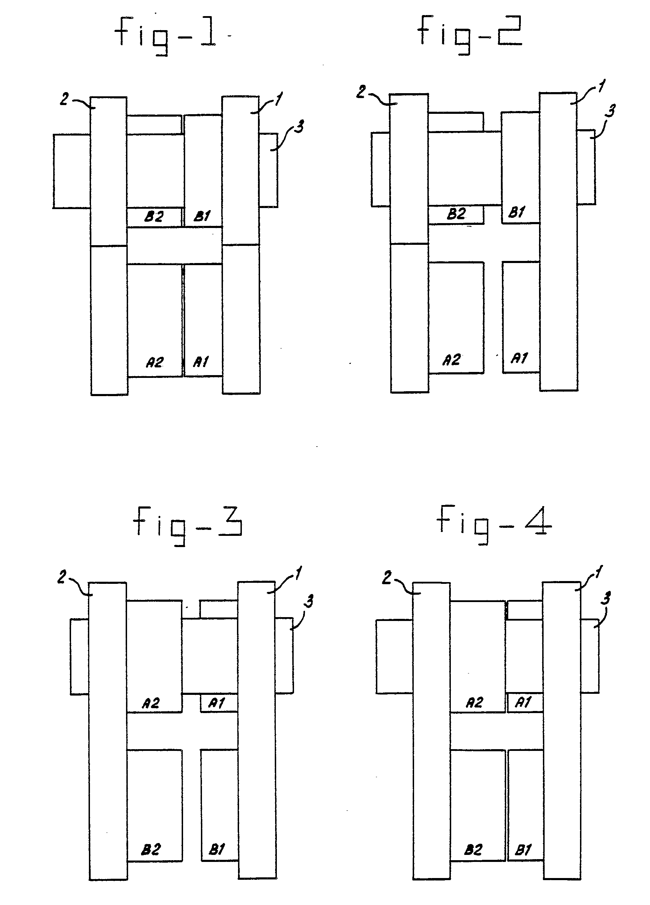

In Fig. 1—4 incl. the plates are indicated with reference numbers 1 and 2. These platens 1 and 2 are shiftable and rotatable on an axis 3. For the simplicity of the drawing the axis 3 is drawn horizontally, but preferably this axis is vertical or inclined.

The platens 1 and 2 each contain two die-sections resp. indicated with A1, B1, and A2, B2. The die-sections A1 and A2 together form the mould A and the die-sections B1 and B2 together form another normally identical mould B.

The die-sections A1, B1 and A2, B2 are connected to the platens 1 and 2 in such a way, that when the die-sections A1 and A2 are just below the axis 3 and are closed, the die-sections B1 and B2 are in the horizontal plane through the axis 3, and B1 in front of the plane of drawing and B2 behind the plane of drawing, see Fig. 1. Thus the die-sections B1 and B2 are free accessible during the solidification time of the casting in the die A.

Fig. 2 shows the mutual position of the platens 1 and 2 after the end of the casting process of the casting in the die A. The platens 1 and 2 have carried out a translational movement with respect to each other along the axis 3.

The platens 1 and 2 can now be rotated with respect to each other around the axis 3. The position rotated over 90° is indicated in Fig. 3. The die-sections A1 and A2 are now respectively behind and in front of the plane of drawing and are free accessible.

Fig. 4 shows the closed position of the die-sections B1 and B2.

The advantage of this arrangement is, that the cycle time of the whole machine is essentially determined by the physically required filling and cooling time of the casting. During this time for the die A the further treatments are carried out on die B, such as control of the core pull members, ejecting and discharging the casting, lubricating and cooling the die sections.

During the cycle time of die B abovementioned further treatment are carried out on die A. At the casting machine according to the present invention these treatments overlap each other in time essentially.

Since the centre of gravity of at least one of the platens with the belonging die-sections preferably does not coincide with the axis 3, that platen works as a gravity pendulum, whereby the platen, after removing the rotation locking means, oscillates by gravity from the position according to Fig. 2 to the position according to Fig. 3. The oscillation time is about 1 second.

If during this oscillation the bearing of the platen on the axis 3 works as a gas bearing or a hydrostatic bearing, the energy loss of the oscillating system is reduced to a minimum and for this reason the platen at the end of the oscillation is in the correct position according to Fig. 3.

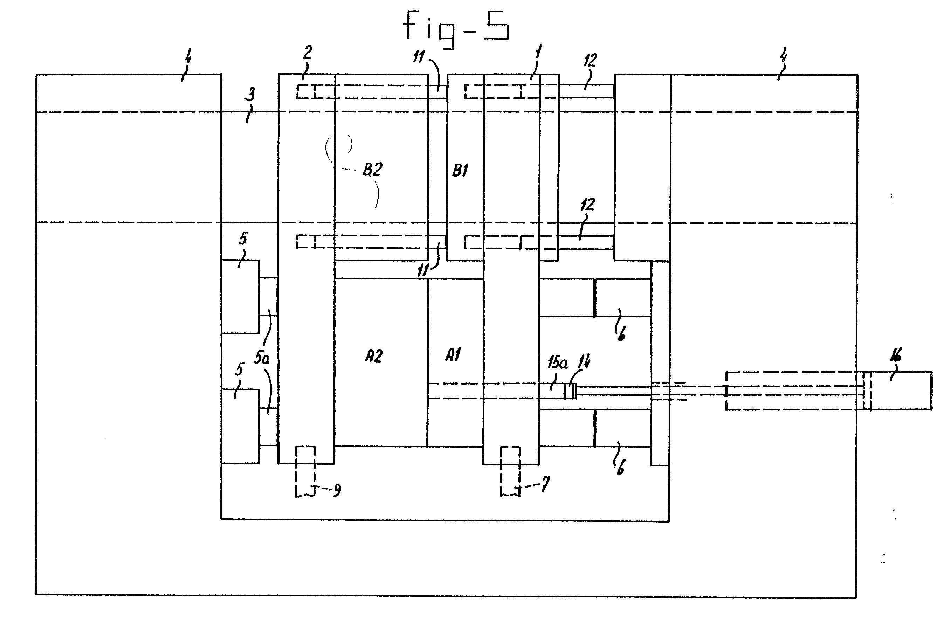

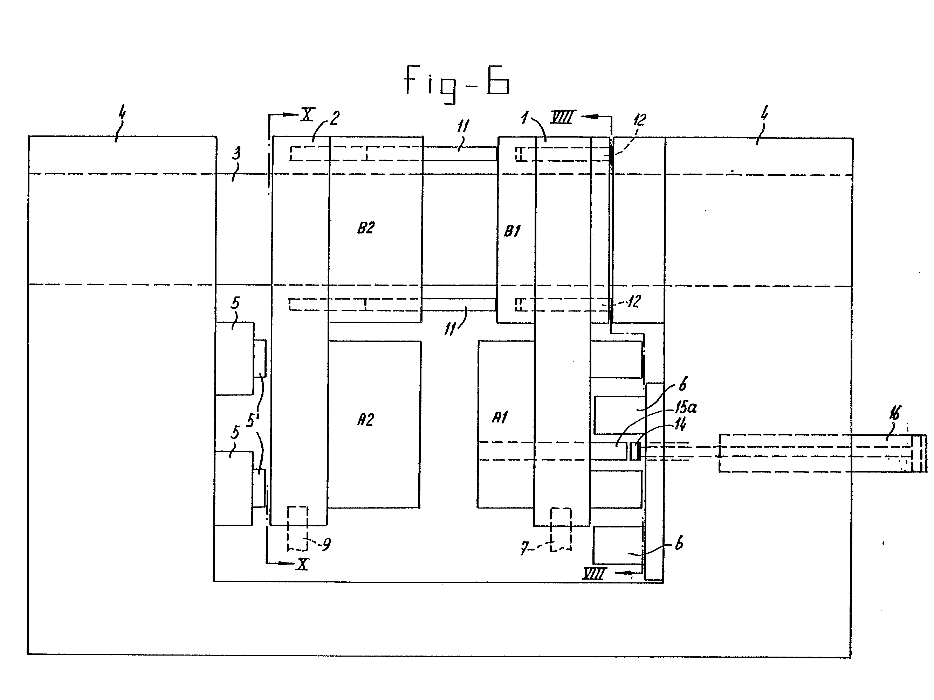

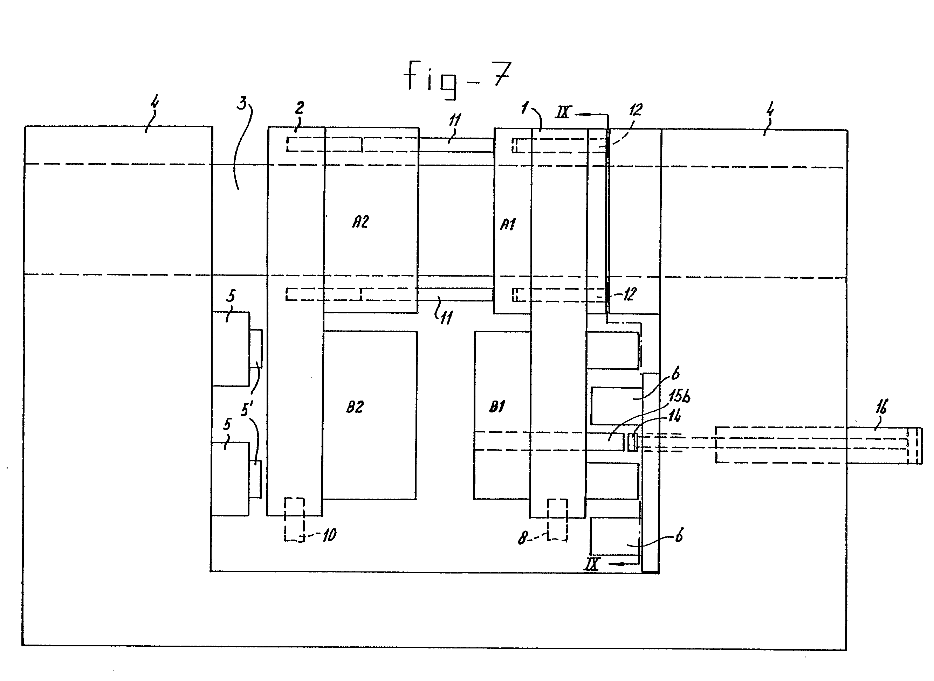

In Fig. 5, 6 and 7 the same machine is shown in a more constructive way. Fig. 5 corresponds with the position according to Fig. 1, Fig. 6 corresponds with Fig. 2 and Fig. 7 corresponds with Fig. 3.

The physical axis 3 is mounted in a frame 4 and forms with the frame a compact and stiff system.

At the left side this frame 4 is provided with a number of hydraulic elements 5, which apply the required closing force for the die sections and at the right side the frame 4 is provided with a locking device 6, which through the frame 4 transfers the reaction force of the closing force on the die-sections.

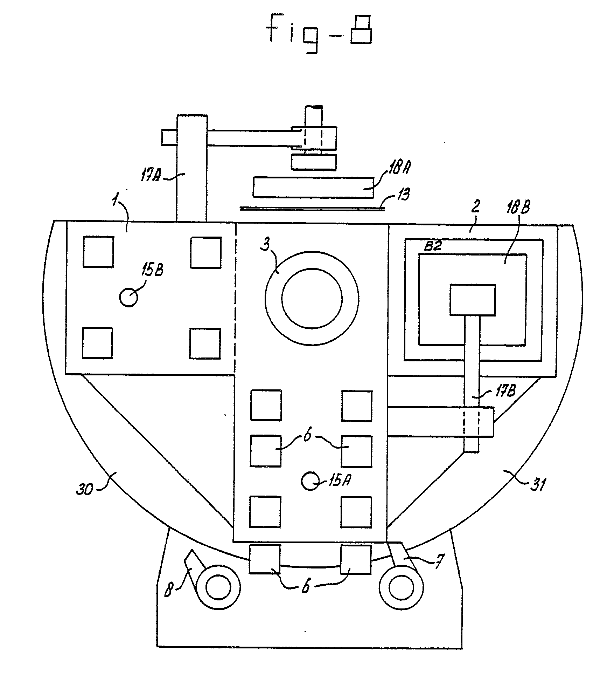

In Fig. 6 the closing force of the hydraulic elements 5 is removed, the locking device 6 is shifted downwards and the platen 1 is translated to the right. This translation is carried out by hydraulic plungers 11 and 12 and the rotation locking devices 7 respectively 8. The device 8 is further explained in Fig. 8, 9 and 12. The position as shown in Fig. 2 is then reached.

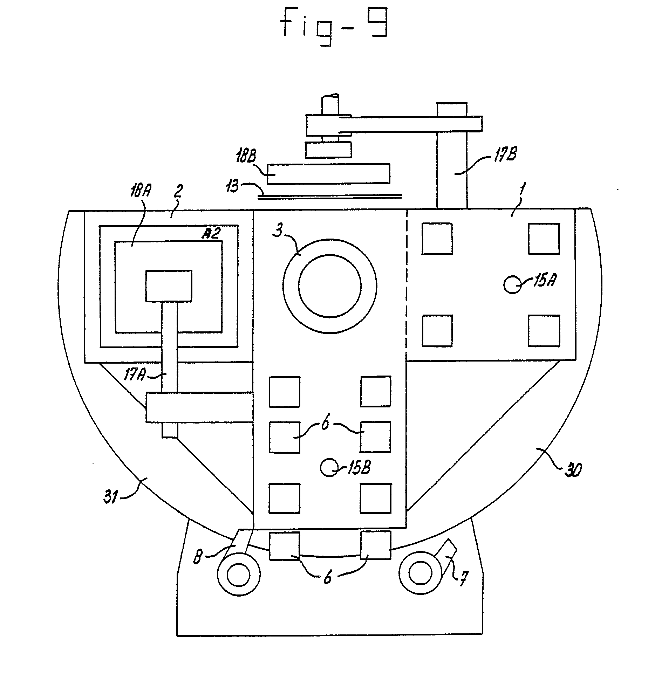

The situation according to Fig. 7 is reached if in the situation according to Fig. 6 the rotation locking devices 7 and 9 as shown in Fig. 8 and 10 are removed, at least one of the platens 1 and 2 oscillates then and is brought to the end position and kept there by means of the rotation locking devices.

The situations in Fig. 6 and Fig. 7 differ in such a way, that the die sections A1 and A2 are replaced by the die sections B1 and B2.

In Fig. 8 the platen 1 is shown completely. From the platen 2 is shown only that part, on which the die section B2 is mounted.

In Fig. 9 the platen 1 is shown also completely. From the platen 2 only that part is shown, on which the die section A2 is mounted.

In Fig. 10 the platen 2 is shown completely. The platen 1 is shown partly, namely only that part on which the die section B1 is mounted, situation corresponding with Fig. 8. Filling the dies A and B with liquid metal takes place as usual by means of a steel cylinder 15 provided with a piston 14, driven by for instance a hydraulic cylinder 16, as shown in Fig. 5, 6 and 7. The die A is filled by means of the cylinder 15A, the die B is filled by means of the cylinder 15B. During rotation of the platen 1 the piston 14 is withdrawn so far, that this is free from the cylinders 15A and 15B. Preferably the platen 1 is not moved translational, but only the platen 2.

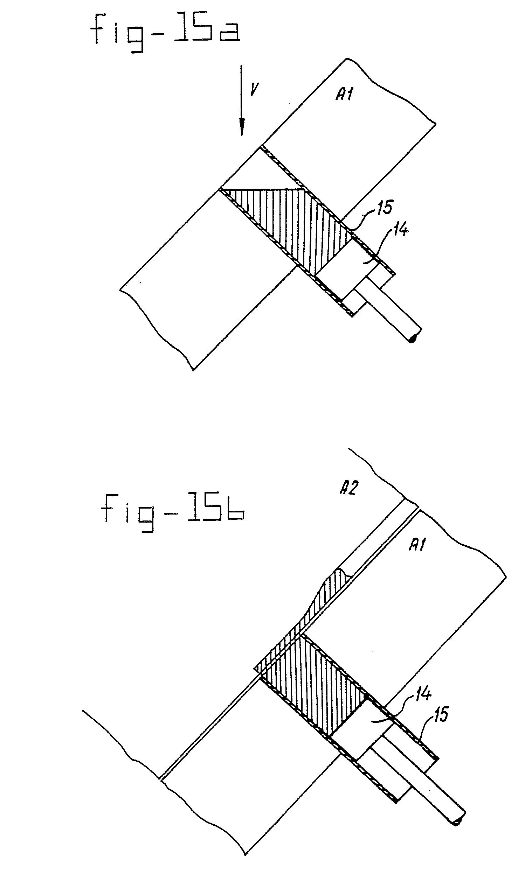

From for instance Fig. 5 it will be clear, that at a horizontal axis 3 the cylinder 15A cannot be filled with liquid metal before the end of the cylinder is closed by the die section A2. This means a retardation in the filling process. For this reason preferably the axis 3 is vertical or inclined. The filling of the cylinder at vertical or inclined axis will be explained with reference to the Fig. 14a, 14b, resp. 15a, 15b.

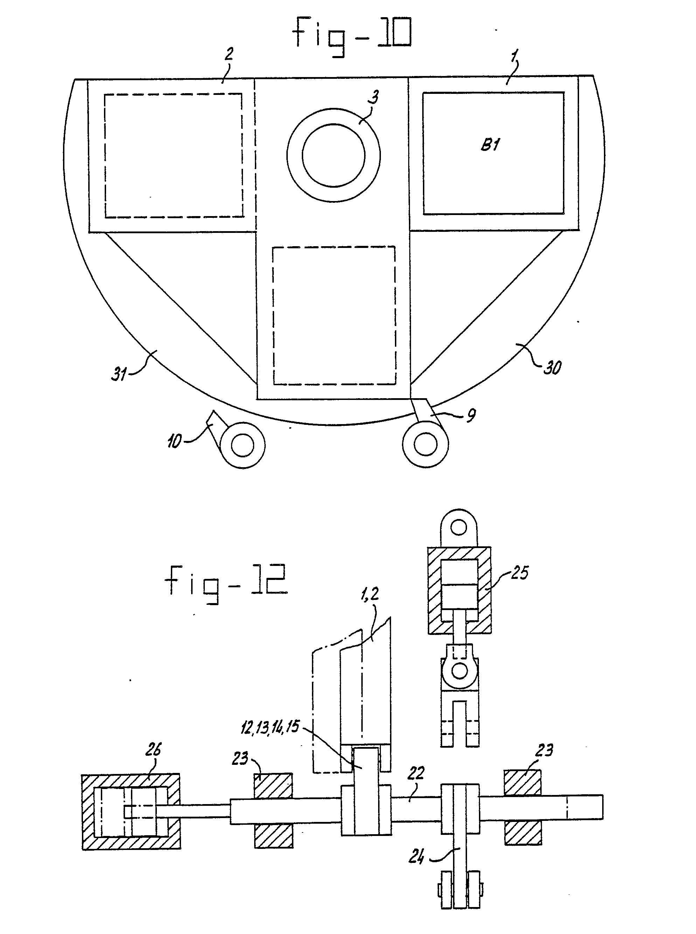

Further in Fig. 8 and 9 the apparatuses for removing the castings are indicated with 17A and 17B, which are mounted both on the platen 1. The operation of these apparatuses 17A and 17B is further explained in Fig. 11, where the casting device is shown in top view.

The casting 18B, which is formed in the die B2, is indicated in Fig. 11a, whereby the apparatus 17B has received the casting 18B. In Fig. 11b the ejection cylinder 19B has ejected the casting 18B and the removing apparatus 17B has brought the casting 18B in the shown position. The apparatus 17B can rotate around the point P.

In Fig. 11c. 17B is rotated to the left over a quart of a circle.

The apparatus 20B for lubricating and cooling the die is mounted on the apparatus 17B.

In Fig. 11c the apparatus 20B has taken its place for treating the die section B2 owing to rotation of the apparatus 17B.

On the platen 2 the die treating apparatus 21B is connected for lubricating and cooling the die section B1. The apparatus 21B comes by movements of the platens 1 and 2 automatically in the right position for treating the die section B1.

If now from Fig. 8 the platen 1 is rotated anticlockwise over a quart of a circle, the apparatus 17B and thus the casting 18B arrive in the centre of the machine, above the conveyor for discharging the casting, as shown in Fig. 9. At the same time the removing apparatus 17A for the die section A2 has taken its place for carrying out the removing cycle, as shown in Fig. 11. At the following rotational movement of the platen 1 in the clockwise direction the casting 18A comes above the conveyor in order to be discharged as is shown in this Fig.

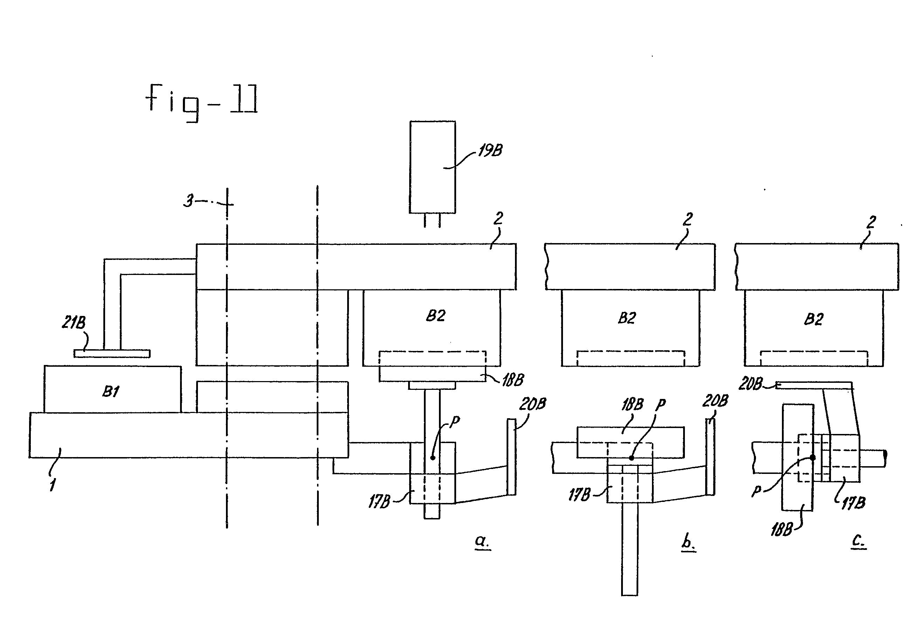

In Fig. 12 the driving for the rotation locking devices 7, 8, 9 and 10 is shown, which devices are connected to a shaft 22, which shaft is supported in bearings 23. The cylinder 25 can lock and delock the platen 1 resp. 2 by means of the lever 24. The cylinder 26 can shift the shaft 22 in axial direction in order to follow or to cause the translation of the platens 1 resp. 2.

As alternative of the locking device 6 shown in the preceding Figure, which yields a reaction force for the closing force of the die sections, a number of variants can be chosen, which are usual in technic, for instance such as indicated in Fig. 13a and 13b. The rods 27 are shiftable in axial direction by locking the cylinder 29 in the frame 4 by means of the slides 26 and 28.

In case both platens are rotatable, the platen 1 is provided with a circular segment 30 and the platen 2 with a circular segment 31, as indicated in Fig. 8, 9 and 10. Both segments have a centre in the axis 3. The oscillation of both platens can be assisted by providing the circular segments with a toothing. By means of a not-shown driving mechanism provided with pinions, cooperating with the toothing of the segments, the platens 1 and 2 can be brought in their end position.

At the shown structure the frame 4 can be compact and stiff.

By blocking the hydraulic liquid in the closing devices during filling the die against flowing away, the stiffness of a system consisting of machine and die is very great, which is favourable for the casting process. Owing to the very small volume of the hydraulic liquid in the closing devices the compressability of this liquid is of no importance for the stiffness of the whole system.

In Fig. 14a and 14b filling of the filling cylinder 15 with liquid metal is shown, when the axis 3 is vertical and in Fig. 15a and 15b if the axis 3 is inclining.

As usual at pressure die casting machines for metals, preferably a so-called cold filling cylinder is used. This cylinder is filled with liquid metal, which after that is pressed into the die cavity by means of a piston 14.

At vertical and inclining arrangement of the axis 3 and thus of the axis of the filling cylinder 15, this cylinder can be filled with liquid metal from above, when the open upperend of the filling cylinder 15 is not closed by the upper die section A2. The filling direction is indicated with arrow V.

During casting in the die sections B1 and B2 the upperside of the die section A1 and thus also the upperside of the filling cylinder 15 is free accessible.

At a vertical axis 3 the filling cylinder 30 can be filled nearly completely until the upperend with liquid metal, see Fig. 14a.

At inclining axis 3 a certain volume cannot be filled with liquid metal, see Fig. 15a.

When the die section A2 closes the die section A1, by means of the piston 14 the die cavity can be filled with liquid metal in the conventional way.

The degree of admission of the filling cylinder is considerably increased with respect to a filling cylinder with horizontal axis, whereby the filling cylinder must be filled through an opening in the upper wall of the filling cylinder. Further in this way the surface of the metal in liquid condition is considerably decreased, so that forming oxide is decreased.

Moreover, the stroke of the filling cylinder 15 can be reduced to about the half, while the control can be simplified.

Moreover, the filling cylinder can be filled now under influence of an inert gas, so that forming of oxide is prevented completely and a degassing of the liquid metal with for instance nitrogene is possible. It is known that the absorption of hydrogen during the filling process can be rather great owing to the humidity of the air.

All these treatments can be carried out during solidification of the casting in the closed die sections B1 and B2 and vice versa.

## Claims

1. Pressure die-casting machine consisting of at least two platens (1, 2), each carrying at least two die-sections ($A_1$, $B_1$; $A_2B_2$), which platens (1, 2) are rotational along a common axis (3), whereby the centre of gravity of at least one of the platens with the die-sections connected therewith is not coinciding with said axis, characterized in that the platens (1, 2) can move with respect to each other in translational and rotational direction along said axis (3), whereby locking means (7—10) are present for locking the rotational movement of the platens (1, 2), which can carry out or follow completely or partly the translational movement of the platen (2).

2. Casting machine according to claim 1, characterized in that the closing and reaction forces of the die are applied behind the projected surface of the die-sections ($A_1$, $B_1$; $A_2$, $B_2$), so that owing to these forces no bending moment can occur in the platens (1, 2).

3. Casting machine according to claim 1 or 2, characterized in that the ejection cylinder(s) (19) for the casting is (are) mounted to the frame of the machine and be operational when the relevant die-section is in the ejection position.

4. Casting machine according to one or more of the preceding claims, characterized in that the back side of the die-sections is completely accessible for mounting the ejection devices (19).

5. Casting machine according to one or more of the preceding claims, characterized in that the apparatus (17) for removing the castings is an integral part of one of the platens (1, 2).

6. Casting machine according to one or more of the preceding claims, characterized in that the apparatus (20, 21) for treating the die is an integral part of the platens (1, 2).

7. Casting machine according to one or more of the preceding claims, with one filling cylinder (15), from which a liquid metal by means of a driven piston (14) under high pressure is brought into the dies cavity, characterized in that the filling cylinder (15) is fixed in the platen and the die-section, which effects the opening of the die sections.

8. Casting machine according to one or more of the preceding claims, characterized in that the platen and the die-section, which does not contain the filling cylinder (15), effects the opening of the die sections.

9. Casting machine according to one or more of the preceding claims, characterized in that the axial locking up one of the platens during applying the closing force is obtained by a locking device (6), which at locking and unlocking is movable parallel to the platen and the frame of the machine.

10. Casting machine according to one or more of the preceding claims, characterized in that the axial locking up one of the platens during applying the closing force is obtained by locking rods (27) which are slidable axially, whereby the locking and unlocking can be obtained by rotating these locking rods or closing them by means of wedges or slides (26, 28).

11. Casting machine according to one or more of the preceding claims, characterized in that both platens are provided with toothed segments (30, 31), cooperating with pinions or the like of a driving mechanism for bringing the platens in the end position.

12. Casting machine according to one or more of the preceding claims, characterized in that the filling cylinder (15) for the liquid metal extends parallel to the common axis (3).

13. Casting machine according to claim 12, characterized in that the filling cylinder (15) is filled with liquid metal through the open cylinder end at the inner side of the die section.

14. Casting machine according to claims 12 and 13, characterized in that means are provided for supplying an inert gas along the filling piston (14) into the liquid metal in order to degas the liquid metal.

**Revendications**

1. Machine à mouler sous pression comprenant au moins deux plateaux (1, 2) portant chacun au moins deux parties de moule ($A_1$, $B_1$; $A_2$, $B_2$), lesdits plateaux (1, 2) étant susceptibles de tourner autour d'un axe commun (3), le centre de gravité de l'un au moins des plateaux avec les parties de moule reliées à lui ne coïncidant pas avec ledit axe, caractérisée par le fait que les plateaux (1, 2) sont mobiles l'un par rapport à l'autre en translation et en rotation le long dudit axe (3), des moyens de verrouillage (7, 10) étant prévus pour bloquer le mouvement de rotation des plateaux (1, 2), lesdits moyens pouvant affectuer ou suivre complètement ou partiellement le mouvement de translation du ou des plateaux.

2. Machine de moulage selon la revendication 1, caractérisée par le fait que les forces de fermeture et de réaction du moule sont appliquées derrière la surface projetée des parties de moule ($A_1$, $B_1$; $A_2$, $B_2$), de telle sorte que, grâce à ces forces, aucun moment de flexion ne peut se produire dans les plateaux (1, 2).

3. Machine de moulage selon la revendication 1 ou 2, caractérisée par le fait qu'un ou des cylindres d'éjection (19) pour la pièce moulée sont montés sur le bâti de la machine et sont actionnés lorsque la partie de moule concernée est dans la position d'éjection.

4. Machine de moulage selon une ou plusieurs des revendications précédentes, caractérisée par le fait que le côté arrière des parties de moule est totalement accessible pour le montage des dispositifs d'éjection (19).

5. Machine de moulage selon une ou plusieurs des revendications précédentes, caractérisée par le fait que le dispositif (17) pour retirer les pièces moulées fait partie intégrante d'un des plateaux (1, 2).

6. Machine de moulage selon une ou plusieurs des revendications précédentes, caractérisée par le fait que le dispositif (20, 21) pour traiter le moule fait partie intégrante des plateaux (1, 2).

7. Machine de moulage selon une ou plusieurs des revendications précédentes, comprenant un cylindre de remplissage (15) depuis lequel un métal liquide est amené sous haute pression dans la cavité de moulage au moyen d'un piston entraîné (14), caractérisée par le fait que le cylindre de remplissage (15) est monté fixe dans le plateau et la partie de moule assurant l'ouverture des parties de moule.

8. Machine de moulage selon une ou plusieurs des revendications précédentes, caractérisée par le fait que le plateau et la partie de moule qui ne comportent pas le cylindre de remplissage (15) effectuent l'ouverture des parties de moule.

9. Machine de moulage selon une ou plusieurs des revendications précédentes, caractérisée par le fait que le verrouillage axial d'un des plateaux lors de l'application de la force de fermeture est obtenu par un dispositif de verrouillage (6) qui, lors du verrouillage et du déverrouillage, est mobile parallèlement au plateau et au bâti de la machine.

10. Machine de moulage selon une ou plusieurs des revendications précédentes, caractérisée par le fait que le verrouillage axial de l'un des plateaux lors de l'application de la force de fermeture est obtenu par des tiges de verrouillage (27) coulissant axialement, le verrouillage et le déverrouillage pouvant être obtenus par rotation de ces tiges de verrouillage ou leur fermeture au moyen de coins ou de coulisses (26, 28).

11. Machine de moulage selon une ou plusieurs des revendications précédentes, caractérisée par le fait que les deux plateaux sont munis de segments dentés (30, 31) coopérant avec des pignons ou analogues d'un mécanisme d'entraînement pour amener les plateaux dans la position d'extrémité.

12. Machine de moulage selon une ou pluseurs des revendications précédentes, caractérisée par le fait que le cylindre de remplissage (15) pour le métal liquide s'étend parallèlement à l'axe commun (3).

13. Machine de moulage selon la revendication 12, caractérisée par le fait que le cylindre de remplissage (15) est rempli de métal liquide par l'extrémité ouverte du cylindre sur le côté intérieur de la partie de moule.

14. Machine de moulage selon les revendications 12 et 13, caractérisée par le fait que des moyens sont prévus pour délivrer un gaz inerte le long du piston de remplissage (14) dans le métal liquide afin de dégazer le métal liquide.

## Patentansprüche

1. Druckgießmaschine mit mindestens zwei Platten (1, 2), die jeweils mindestens zwei Gießformabschnitte ($A_1$, $B_1$; $A_2$, $B_2$) tragen und um eine gemeinsame Achse (3) drehbar sind, wobei der Schwerpunkt mindestens einer der Platten mit den damit verbundenen Gießformabschnitten nicht mit dieser Achse zusammenfällt, dadurch gekennzeichnet, daß die Platten (1, 2) relativ zueinander in Translations- und Drehrichtung um die Achse beweglich sind, wobei Sperrvorrichtungen (7, 10) zum Blockieren der Drehbewegung der Platten (1, 2) vorgesehen sind, die die Translationsbewegung der Platte(n) durchführen oder ihr vollständig oder teilweise folgen.

2. Gießmaschine nach Anspruch 1, dadurch gekennzeichnet, daß die Schließ- und Reaktionskräfte der Gießform hinter der projizierten Oberfläche der Gießformabschnitte ($A_1$, $B_1$; $A_2$, $B_2$) angreifen, so daß aufgrund dieser Kräfte in den Platten (1, 2) kein Biegemoment auftreten kann.

3. Gießmaschine nach Anspruch 1 oder 2, dadurch gekennzeichnet, daß der bzw. die Auswurfzylinder (19) für das Gußstück am Rahmen der Machine montiert ist bzw. sind und betätigbar ist bzw. sind, wenn der betreffende Gießformabschnitt in der Auswurfstellung ist.

4. Gießmaschine nach einem oder mehreren der vorhergehenden Ansprüche, dadurch gekennzeichnet, daß die Rückseite der Gießformabschnitte zum Montieren der Auswurfvorrichtungen (19) vollständig zugänglich ist.

5. Gießmaschine nach einem oder mehreren der vorhergehenden Ansprüche, dadurch gekennzeichnet, daß die Vorrichtung (17) zum Entfernen der Gußstücke ein einstückiger Teil einer der Platten (1, 2) ist.

6. Gießmaschine nach einem oder mehreren der vorhergehenden Ansprüche, dadurch gekennzeichnet, daß die Vorrichtung (20, 21) zum Behandeln der Gießform ein einstückiger Teil der Platten (1, 2) ist.

7. Gießmaschine nach einem oder mehreren der vorhergehenden Ansprüche, mit einem Füllzylinder (15), von dem ein flüssiges Metall mittels eines angetriebenen Kolbens (14) unter hohem Druck in den Hohlraum der Gießform gebracht wird, dadurch gekennzeichnet, daß der Füllzylinder (15) in der Platte und den Gießformabschnitten befestigt ist, wodurch das Öffnen der Gießformabschnitte bewirkt wird.

8. Gießmaschine nach einem oder mehreren der vorhergehenden Ansprüche, dadurch gekennzeichnet, daß die Platte und der nicht den Füllzylinder (15) enthaltende Gießformabschnitt das Öffnen der Gießformabschnitte bewirken.

9. Gießmaschine nach einem oder mehreren der vorhergehenden Amsprüche, dadurch gekennzeichnet, daß das axiale Blockieren einer der Platten während des Angriffs der Schließkraft durch eine Sperrvorrichtung (6) bewirkt wird, die beim Blockieren und Entriegeln parallel zu der Platte und dem Rahmen der Maschine beweglich ist.

10. Gießmaschine nach einem oder mehreren der vorhergehenden Ansprüche, dadurch gekennzeichnet, daß das axiale Blockieren einer der Platten während des Angriffs der Schließkraft durch axial verschiebbare Sperrstangen (27) bewirkt wird, wobei das Blockieren und Entriegeln durch Drehen oder Schließen dieser Sperrstangen mittels Keilen oder Schlitten (26, 28) bewirkt wird.

11. Gießmaschine nach einem oder mehreren der vorhergehenden Ansprüche, dadurch gekennzeichnet, daß beide Platten gezahnte Segmente (30, 31) aufweisen, die mit Ritzeln oder dergl. einer Antriebsvorrichtung zusammanwirken, um die Platten in die Endstellung zu bringen.

12. Gießmaschine nach einem oder mehreren der vorhergehenden Ansprüche, dadurch gekennzeichnet, daß sich der Füllzylinder (15) für das flüssige Metall parallel zu der gemeinsamen Achse (3) erstreckt.

13. Gießmaschine nach Anspruch 12, dadurch gekennzeichnet, daß der Füllzylinder (15) durch das offene Zylinderende an der Innenseite des Gießformabschnittes mit flüssigem Metall gefüllt wird.

14. Gießmaschine nach den Ansprüchen 12 und 13, dadurch gekennzeichnet, daß eine Einrichtung zum Zuführen eines inerten Gases entlang des Füllkolbens (14) in das flüssige Metall vorgesehen ist, um das flüssige Metall zu entgasen.

fig-1

fig-2

fig-3

fig-4

Fig-5

Fig-6

Fig-7

Fig-8

# Fig-9

# Fig-10

# Fig-12

fig-11

19B

21B

B1

1

3

2

B2

18B

P

17B

20B

a.

18B  P

17B

20B

b.

2

B2

20B

P

18B

17B

c.

2

B2

8

0 036 687

Fig-13a

Fig-13b

# fig-14a

A1

15

14

# fig-14b

A2

A1

15

14

fig-15a

A1

V

15

14

fig-15b

A2

A1

14

15